# EUROPÄISCHE PATENTSCHRIFT

(11) **EP 4 240 603 B1**
(45) Veröffentlichungstag und Bekanntmachung des Hinweises auf die Patenterteilung: **10.09.2025**
(21) Anmeldenummer: 21802369.5
(22) Anmeldetag: 05.11.2021
(51) Int. Cl.: B60G 17/02, E04H 6/30

(54) **DEZENTRALE ANTISCHLUPFREGELUNG**
DECENTRALIZED ANTI-SLIP CONTROL
RÉGULATION D'ANTIPATINAGE DÉCENTRALISÉE

(30) Priorität: 08.11.2020 DE 102020214004
(43) Veröffentlichungstag der Anmeldung: 13.09.2023
(73) Patentinhaber: Fraunhofer-Gesellschaft zur Förderung der angewandten Forschung e.V., 80686 München (DE)
(72) Erfinder: BEHLING, Jan, 44227 Dortmund (DE); ROTGERI, Mathias, 44227 Dortmund (DE); EMMERICH, Jan Sören, 44227 Dortmund (DE); HÖNING, Dirk, 44227 Dortmund (DE); KLOKOWSKI, Patrick, 44227 Dortmund (DE); HAMMERMEISTER, Christian, 44227 Dortmund (DE)
(74) Vertreter: König, Andreas Rudolf
(86) Internationale Anmeldenummer: PCT/EP2021/080788
(87) Internationale Veröffentlichungsnummer: WO 2022/096654

(56) Entgegenhaltungen:
- CN-A- 108 149 989
- CN-B- 104 943 873
- DE-A1- 102017 217 827
- JP-A- 2017 005 814
- US-A1- 2018 043 951

## Beschreibung

Die vorliegende Erfindung bezieht sich auf Fahrzeuge mit einem omnidirektionalen Antriebssystem, auf ein Sortiersystem mit einer Vielzahl solcher Fahrzeuge sowie auf ein Verfahren und ein Computerprogrammprodukt zum Betreiben eines Fahrzeugs. Die vorliegende Erfindung bezieht sich insbesondere auf eine dezentrale Antischlupfregelung durch Verwendung von ungenutzten Ressourcen in Teilsystemen.

Fahrzeuge, die sich mit Allseitenrädern flächenbeweglich fortbewegen, müssen jedes ihrer angetriebenen Räder, zumindest drei, gezielt ansteuern, um die gewünschte Trajektorie abzufahren. Werden solche Fahrzeuge an der Höchstgrenze ihrer physikalischen Eigenschaften betrieben, also kurz bevor die Räder durchdrehen, so gibt es mehrere dominante Faktoren, welche die Regelgüte limitieren. Zum einen müssen alle auftretenden physikalischen Kräfte in der Regelung berücksichtigt werden, zum anderen hat die Regelschleife eine Berechnungszeit, so dass nur innerhalb einer gewissen Zeitspanne, etwa alle 20 Millisekunden, neue Stellwerte berechnet werden können, welche dann über die Dauer hinweg konstant vom Antrieb gestellt werden. Sollte bereits zu Beginn dieser Zeitspanne eine Störung auftreten, so wird sich ein Fehler ab diesem Zeitpunkt aufsummieren und erst im nächsten Regelzyklus berücksichtigt.

Systeme zur Antischlupfregelung sind bereits seit längerem bekannt. Diese sind als Assistenzsysteme für menschliche Fahrer gedacht. In automatisierten Fahrzeugen hingegen ist die Schlupfkontrolle Bestandteil der zentralen Regelung, welche in einer festen Rate, beispielsweise alle 20 Millisekunden, zyklisch berechnet werden. Anschließend wird jedem Antrieb sein Sollwert übermittelt. Nach einem Zyklus werden dann die aktuellen Werte gemessen und es findet ein neuer Zyklus statt.

Bekannte Systeme haben den Nachteil, dass sie insbesondere an den genannten physikalischen Grenzen unzureichende Ergebnisse liefern.

Es besteht deshalb ein Bedarf an präzisen Antischlupfkonzepten. JP 2017 005814 A offenbart insbesondere ein Fahrzeug mit:
einem omnidirektionalen Antriebssystem, das ausgebildet ist, um eine Bewegung des Fahrzeugs bereitzustellen;
wobei das omnidirektionale Antriebssystem eine Vielzahl von omnidirektionalen Antriebseinrichtungen aufweist, wobei jede der Vielzahl omnidirektionaler Antriebseinrichtung eine dezentrale Berechnungseinrichtung und einen zugeordneten, zum Bereitstellen eines Bewegungsbeitrags für die Bewegung eingerichteten Aktuator aufweist;
eine Steuereinrichtung zum Bereitstellen eines Steuerbefehls an das omnidirektionale Antriebssystem, der eine Anweisung zur Ausführung der Bewegung enthält.

Eine Aufgabe der vorliegenden Erfindung besteht deshalb darin, Fahrzeuge, Sortiersysteme mit solchen Fahrzeugen, Verfahren zum Betreiben eines Fahrzeugs und ein entsprechendes Computerprogrammprodukt zu schaffen, das es ermöglicht, präzise auf Abweichungen vom Sollwert zu reagieren.

Diese Aufgabe wird durch den Gegenstand der unabhängigen Patentansprüche gelöst.

Ein Kerngedanke der vorliegenden Erfindung besteht darin, erkannt zu haben, dass durch eine lokalisierte Betrachtung und Auswertung einer Abweichung eines Antriebs beziehungsweise des Fahrzeugs von der angesteuerten Sollbewegung, Dezentralen einer jeweiligen Berechnungseinrichtung sowohl geringe Latenzen als auch präzise Ergebnisse erhalten werden können. Es wurde ferner erkannt, dass diese Lösungen möglicherweise mit geringem Aufwand erhalten werden können, da Antriebseinrichtungen, die für Fahrzeuge verwendet werden, oft ungenutzte Rechenleistung aufweisen, welche für die erfindungsgemäßen Ausführungsbeispiele genutzt werden kann.

Erfindungsgemäß umfasst ein Fahrzeug ein omnidirektionales Antriebssystem, das ausgebildet ist, um eine Bewegung des Fahrzeugs bereitzustellen. Das omnidirektionale Antriebssystem weist eine Vielzahl von omnidirektionalen Antriebseinrichtungen auf, wobei jede der Vielzahl omnidirektionaler Antriebseinrichtungen eine dezentrale Berechnungseinrichtung und einen zugeordneten, zum Bereitstellen eines Bewegungsbeitrags für die Bewegung eingerichteten Aktuator aufweist. Das Fahrzeug umfasst eine Steuereinrichtung zum Bereitstellen eines Steuerbefehls an das omnidirektionale Antriebssystem, der eine Anweisung zur Ausführung der Bewegung enthält. Jede der dezentralen Berechnungseinrichtungen ist ausgebildet, um aus einer Sollbewegung für das Fahrzeug einen Soll-Bewegungsbeitrag für die dezentrale Antriebseinrichtung zu bestimmen, und um aus dem Soll-Bewegungsbeitrag eine Ansteuerung des zugeordneten Aktuators zu bestimmen. Ferner ist jede der dezentralen Berechnungseinrichtungen ausgebildet, um eine Abweichung zwischen dem Soll-Bewegungsbeitrag und einem tatsächlichen Bewegungsbeitrag, etwa mittels eines Fahrtvektors, zu bestimmen und eine Korrektur auszuführen, etwa um die Abweichung zumindest teilweise zu reduzieren korrigieren. Das bedeutet, es kann bereits lokal erkannt werden, dass von der Sollbewegung abgewichen wird, was mit geringen Latenzen, gegebenenfalls mit redundant vorhandenen Rechenleistungen und ferner äußerst präzise erhalten werden kann.

Gemäß einem Ausführungsbeispiel stellt jede der Vielzahl von omnidirektionalen Antriebseinrichtungen eine dezentrale Antischlupfregelung für das Antriebssystem bereit. Durch eine dezentrale Implementierung der Antischlupfregelung kann auf das Kombinieren entsprechender Ergebnisse in einer zentralen Berechnungseinrichtung verzichtet werden, was zu einer schnellen Reaktionszeit führt.

Gemäß einem Ausführungsbeispiel ist die Steuereinrichtung ausgebildet, um für ein übereinstimmendes Zeitintervall jeder der Vielzahl der omnidirektionalen Antriebseinrichtungen denselben Steuerbefehl bereitzustellen, etwa als sogenannter Broadcast. Dies ermöglicht, dass die parallel angesteuerten Antriebseinrichtungen dieselben oder vergleichbare SOLL-Größen erzeugen, so dass eine einfache Korrektur der Ansteuerung auch in von einer Abweichungen bereitstellenden Antriebseinrichtung einfach möglich ist.

Gemäß einem Ausführungsbeispiel ist jede der dezentralen Berechnungseinrichtungen ausgebildet, um die Abweichung des von dem zugeordneten Aktuator bereitgestellten tatsächlichen Bewegungsbeitrags bezüglich des Soll-Bewegungsbeitrags festzustellen, und um für ein nachfolgendes Zeitintervall die Ansteuerung des zugeordneten Aktuators basierend auf der Abweichung zu ändern, um die Abweichung zu reduzieren. Dies ermöglicht eine lokale Fehlerkorrektur, was mit geringem Komplexitätsgrad einhergeht.

Gemäß einem Ausführungsbeispiel ist die dezentrale Berechnungseinrichtung ausgebildet, um einen Korrekturvektor für einen die Sollbewegung repräsentierenden Fahrtvektor zu bestimmen, und um die Ansteuerung basierend auf einer Kombination des Fahrtvektors mit dem Korrekturvektor auszuführen, um die Abweichung zu reduzieren. Anders ausgedrückt kann die dezentrale Berechnungseinrichtung eine Abweichung (engl.: offset) kompensieren, beispielsweise durch Linearkombination mit dem Korrekturvektor, um basierend auf einer veränderten Ansteuerung die Sollbewegung zu erhalten, was mit geringem Komplexitätsgrad möglich ist.

Gemäß einem Ausführungsbeispiel umfasst jede der omnidirektionalen Antriebseinrichtungen eine zugeordnete Sensoreinrichtung, um dezentral die Bewegung der mobilen Vorrichtung und/oder den tatsächlichen Bewegungsbeitrag zu erfassen, und um die Abweichung basierend auf der dezentral bestimmten Bewegung und/oder tatsächlichen Beitrag zu bestimmen. Hierdurch kann eine Informationsredundanz erhalten werden und ferner auch eine aufwändige Kommunikation oder eine Abfrage eines zentralisierten Sensors durch mehrere dezentrale Einrichtungen vermieden werden.

Gemäß einem Ausführungsbeispiel umfasst die Sensoreinrichtung einen optischen Flusssensor und die Antriebseinrichtung ist ausgebildet, um die Bewegung unter Verwendung des optischen Flusssensors zu bestimmen. Flusssensoren weisen den Vorteil auf, dass sie mit äußerst geringen Latenzen Bewegungsinformationen liefern können.

Gemäß einem Ausführungsbeispiel ist die Antriebseinrichtung ausgebildet, um die Abweichung basierend auf einer Drehzahl des dezentralen Aktuators, einer Stromaufnahme des dezentralen Aktuators und/oder der Bewegung der mobilen Vorrichtung zu bestimmen. Das bedeutet, basierend auf einem Vergleich der Eingangsgrößen und der Ausgangsgröße kann die Abweichung bestimmt werden, was einfach und mit geringen Rechenzeiten möglich ist.

Gemäß einem Ausführungsbeispiel ist jede der dezentralen Berechnungseinrichtungen ausgebildet, um eine Abweichung des von dem zugeordneten Aktuator bereitgestellten Bewegungsbeitrags zu dem Soll-Bewegungsbeitrag festzustellen, und um die Abweichung an andere Antriebseinrichtungen der Vielzahl omnidirektionaler Antriebseinrichtungen zu übermitteln. Dies ermöglicht beispielsweise, dass durch eine der dezentralen Antriebseinrichtungen erzeugte Abweichung des Gesamtfahrtvektors des Fahrzeugs eine Kompensation unter Zuhilfenahme der anderen dezentralen Antriebseinrichtungen erfolgen kann, so dass auch große Abweichungen in einer dezentralen Antriebseinrichtung kompensiert werden können.

Gemäß einem Ausführungsbeispiel ist eine der Antriebseinrichtungen ausgebildet, um eine Information zu empfangen, die eine Abweichung zwischen dem Soll-Bewegungsbeitrag und eines von einer anderen Antriebseinrichtung tatsächlich erzeugten Bewegungsbeitrags angibt. Die dezentrale Berechnungseinrichtung ist ausgebildet, um die Ansteuerung des zugeordneten Aktuators basierend auf der Abweichung der anderen Antriebseinrichtung anzupassen. Insbesondere in Kombination mit der Möglichkeit, eine eigene Abweichung zu senden, kann hierdurch der komplementäre Teil implementiert werden, einen Fehler in einer anderen Antriebseinrichtung zu kompensieren.

Gemäß einem Ausführungsbeispiel ist die dezentrale Berechnungseinrichtung ausgebildet, um aus der Information, die von der anderen Antriebseinrichtung erhalten wird, einen Korrekturvektor für einen die Sollbewegung oder den Soll-Bewegungsbeitrag repräsentierenden Fahrtvektor zu erhalten, etwa indem der Fahrtvektor direkt empfangen wird oder von der dezentralen Berechnungseinrichtung berechnet wird, und um die Ansteuerung basierend auf einer Kombination des Fahrtvektors mit dem Korrekturvektor auszuführen, um die Ansteuerung anzupassen. Das bedeutet, die Antriebseinrichtung kann den von einer zentralen Steuereinrichtung vorgegebenen Steuerbefehl anpassen, um einen Fehler in einer anderen Antriebseinrichtung zu kompensieren, was ein hohes Maß an Flexibilität und ein geringes Maß an Latenz ermöglicht, was beides vorteilhaft ist.

Gemäß einem Ausführungsbeispiel ist die Steuereinrichtung mit den dezentralen Berechnungseinrichtungen über ein Bussystem verbunden. Bussysteme ermöglichen schnelle und robuste Informationsübertragungen.

Gemäß einem Ausführungsbeispiel umfasst zumindest eine der omnidirektionalen Antriebseinrichtungen ein Allseitenrad. Diese ermöglichen präzise omnidirektionale Bewegungen.

Gemäß einem Ausführungsbeispiel umfasst zumindest eine der Antriebseinrichtungen Mecanumräder, die ebenfalls gute Eigenschaften für omnidirektionale Bewegungen aufweisen.

Gemäß einem Ausführungsbeispiel ist das Fahrzeug als Roboter zum Lastentransport gebildet.

Gemäß einem Ausführungsbeispiel umfasst ein Sortiersystem eine Vielzahl von Fahrzeugen gemäß hierin beschriebenen Ausführungsbeispielen.

Gemäß einem Ausführungsbeispiel umfasst ein Verfahren zum Betreiben eines Fahrzeugs, ein omnidirektionales Antriebssystem, das ausgebildet ist, um eine Bewegung der mobilen Vorrichtung bereitzustellen, wobei das omnidirektionale Antriebssystem eine Vielzahl von omnidirektionalen Antriebseinrichtungen aufweist, wobei jede der Vielzahl omnidirektionaler Antriebseinrichtungen eine dezentrale Berechnungseinrichtung und einen zugeordneten, zum Bereitstellen eines Bewegungsbeitrags für die Bewegung eingerichteten Aktuator aufweist, folgende Schritte: ein Bereitstellen eines Steuerbefehls an das omnidirektionale Antriebssystem, der eine Anweisung zur Ausführung der Bewegung enthält, ein Bestimmen einer Sollbewegung für das Fahrzeug mit jeder der dezentralen Berechnungseinrichtungen, ein Bestimmen einer Ansteuerung des zugeordneten Aktuators für einen Soll-Bewegungsbeitrag aus der Sollbewegung mit jeder der dezentralen Berechnungseinrichtungen und ein Bestimmen Korrigieren einer Abweichung zwischen dem Soll-Bewegungsbeitrag und einem tatsächlichen Bewegungsbeitrag mit jeder der dezentralen Berechnungseinrichtungen und ein Ausführen einer Korrektur basierend auf der Abweichung.

Ein weiteres Ausführungsbeispiel schafft ein Computerprogrammprodukt mit einem Programmcode zur Ausführung eines solchen Verfahrens.

Weitere vorteilhafte Ausführungsformen sind der Gegenstand weiterer abhängiger Patentansprüche.

Unter Bezugnahme auf die beiliegenden Zeichnungen werden nachfolgend besonders bevorzugte Ausführungsformen näher erläutert. Dabei zeigen:
- Fig. 1a: ein schematisches Blockschaltbild eines Fahrzeugs gemäß einem Ausführungsbeispiel;
- Fig. 1b: ein schematisches Blockdiagramm einer omnidirektionalen Antriebseinrichtung des Fahrzeugs aus Fig. 1a gemäß einem Ausführungsbeispiel;
- Fig. 2: ein schematisches Blockschaltbild einer Verschaltung einer Steuereinrichtung eines Fahrzeugs mit mehreren Antriebseinrichtungen gemäß einem Ausführungsbeispiel;
- Fig. 3a: eine schematische Draufsicht auf ein Fahrzeug gemäß einem Ausführungsbeispiel, das beispielhaft vier symmetrisch angeordnete Antriebseinrichtungen aufweist sowie eine schematische Darstellung eines auftretenden Fehler;
- Fig. 3b: eine schematische Darstellung der hierin beschrieben Ausführungsbeispiele auf den Fehler aus Fig. 3a; und
- Fig. 4: ein schematisches Blockdiagramm eines Sortiersystems gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer De**taildarstellung beschrieben.**

Hierin beschriebene Ausführungsbeispiele beziehen sich auf Fahrzeuge mit einem omnidirektionalen Antriebssystem. Derartige Fahrzeuge können auch als holonomische Fahrzeuge bezeichnet werden. Das bedeutet, dass die Anzahl der steuerbaren Freiheitsgrade gleich der Anzahl an insgesamt im System vorhandenen Freiheitsgraden sein kann. Als holonomisches Fahrzeug beziehungsweise holonomischer Roboter kann eine Einrichtung verstanden werden, die in der Lage ist, jede beliebige Trajektorie im sogenannten Konfigurationsraum (engl.: configuration space), das heißt effektiv der Raum, welcher aus den beispielhaft drei Freiheitsgraden mit den Positionen X, Y und der Rotation gebildet wird, zu durchfahren, solange die Randbedingung der Beschleunigung eingehalten wird. Im Gegensatz dazu stehen beispielsweise Fahrzeuge wie ein Automobil, welches normalerweise nicht in der Lage ist, seitlich in eine Parklücke zu fahren. Hier müssen verhältnismäßig komplizierte Trajektorien gewählt werden, um das Fahrzeug zwei Meter seitlich zu bewegen, beispielsweise da das Automobil nur zwei steuerbare Freiheitsgrade aufweist. Hierzu wird angenommen, dass Systeme von auf dem Boden fahrenden Fahrzeugen insgesamt drei Freiheitsgrade aufweisen, zwei für die Positionen X und Y und einen für die Rotation.

Für die Implementierung einer sogenannten omnidirektionalen Antriebseinrichtung sind mehrere Konzepte bekannt, wobei Ausführungsbeispiele insbesondere auf Fahrzeuge gerichtet sind, deren Antriebseinrichtungen Allseitenräder (engl.: Omniwheels) und/oder sogenannte Mecanumräder umfassen, die gute Eigenschaften für die Bewegung eines Fahrzeugs aufweisen. Ein Unterschied zwischen Allseitenrädern oder Omniwheels und Mecanumrädern ist beispielsweise, dass Allseitenrädern in Laufrichtung gesehen wenig oder keine Seitenkräfte aufnehmen können, Mecanumräder aber schon. Ungeachtet dessen können mit Mecanumrädern gleiche oder ähnliche Kinematiken realisiert werden wie mit Allseitenrädern, was zu einer guten Verwendbarkeit beider Einrichtungen führt.

Hierin beschriebene Ausführungsbeispiele beziehen sich auf Bewegungsbeiträge, die von einer dezentralen Antriebseinrichtung als Komponente zu einer Gesamtbewegung des Fahrzeugs geleistet werden. Der Bewegungsbeitrag ist dabei bspw. eine Kraft, so dass eine Summe an Kräften mehrerer dezentraler Antriebseinrichtungen eine Gesamtkraft bereitstellen kann, die zur Beschleunigung, Verzögerung/Bremsen, Richtungsänderung oder dergleichen für das Fahrzeug führt. Diese Kraft hängt von mehreren Faktoren ab, etwa Reibwerten, Gewicht des Fahrzeugs, zugeführte elektrische Energie oder dergleichen, so dass diese Faktoren, etwa ein zugeführter Strom, der direkt mit der Kraft korreliert ist, ebenfalls im Rahmen der Ausführungsbeispiele als Beitrag zur Bewegung betrachtet werden können.

Hierin beschriebene Ausführungsbeispiele beziehen sich auf Fahrzeuge im Allgemeinen und werden im Speziellen als Lastenroboter oder Roboter zum Lastentransport beschrieben. Insbesondere handelt es sich hierbei um autonom oder zumindest teilautonom fahrende Fahrzeuge, etwa in einem Logistikzentrum oder anderen Arten von Sortiersystemen.

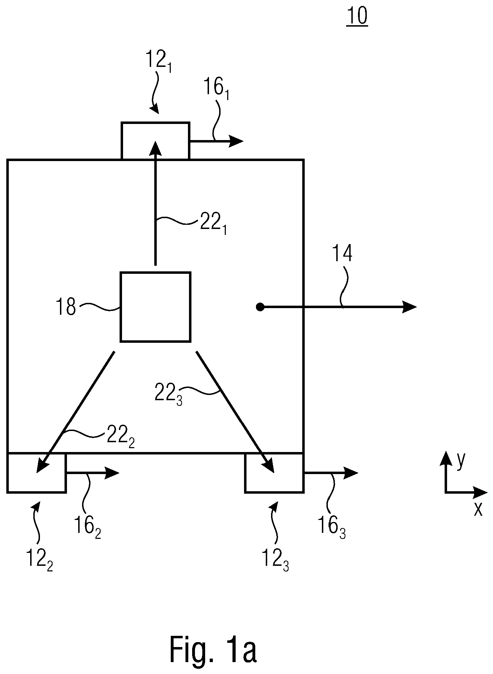

Fig. 1a zeigt ein schematisches Blockschaltbild eines Fahrzeugs 10 gemäß einem Ausführungsbeispiel. Das Fahrzeug 10 umfasst ein omnidirektionales Antriebssystem, das ausgebildet ist, um eine Bewegung des Fahrzeugs bereitzustellen. Im Sinne eines omnidirektionalen Antriebssystems ist es, in Übereinstimmung mit der Definition eines holonomischen Fahrzeugs, jede beliebige Trajektorie beschreiben zu können, zumindest unter Einhaltung der physikalischen Randbedingungen, wie beispielweise Beschleunigungen oder dergleichen. Hierzu weist das omnidirektionale Antriebssystem eine Vielzahl von omnidirektionalen Antriebseinrichtungen 12₁, 12₂ und 12₃ auf. Das omnidirektionale Antriebssystem umfasst zumindest drei, möglicherweise aber auch 4, 5 oder eine höhere Anzahl von Antriebseinrichtungen 12, die symmetrisch oder asymmetrisch verteilt an dem Fahrzeug 10 angebracht sein können. Jede der Antriebseinrichtungen 12₁ bis 12₃ ist beispielsweise eingerichtet, um eine Kraft auf einen befahrenen Untergrund aufzubringen, um eine Kraftkomponente und/oder eine Bewegungskomponente für eine Bewegung 14 des Fahrzeugs 10 bereitzustellen. Von den Antriebseinrichtungen 12₁ bis 12₃ jeweils bereitgestellte Bewegungsbeiträge 16₁, 16₂ beziehungsweise 16₃ können dazu gleichgerichtet sein, das bedeutet, zumindest in ihrer Richtung, bevorzugt aber auch in ihrem Betrag, gleichgerichtet zu sein, beispielsweise um eine Bewegung entlang einer Geraden auszuführen. Die Bewegungsbeiträge 16₁, 16₂ und 16₃ können aber auch entlang unterschiedlicher x/y-Richtungen angeordnet sein, etwa um in Kombination die Bewegung 14 entlang einer Geraden bereitzustellen oder um eine Rotation des Fahrzeugs 10 zu ermöglichen.

Das Fahrzeug 10 umfasst eine Steuereinrichtung zum Bereitstellen eines Steuerbefehls an das omnidirektionale Antriebssystem, der eine Anweisung zur Ausführung der Bewegung 14 enthält. Hierbei kann jede der Antriebseinrichtungen 12₁, 12₂ und 12₃ einen jeweiligen Steuerbefehl 22₁, 22₂ beziehungsweise 22₃ empfangen. Die Steuerbefehle 22₁, 22₂ und 22₃ können voneinander verschieden sein, sind aber bevorzugt übereinstimmend oder identisch gebildet, so dass für ein übereinstimmendes Zeitintervall jede der Vielzahl von omnidirektionalen Antriebseinrichtungen denselben Steuerbefehl erhalten kann. Hierzu können mehrere Signale gleichen Inhalts an unterschiedliche Antriebseinrichtungen 12₁, 12₂ und 12₃ gesendet werden und/oder es kann ein Signal an mehrere Antriebseinrichtungen gesendet werden.

Die Bewegungsbeiträge 16₁ bis 16₃ können dabei aus den Steuerbefehlen direkt extrahiert oder hieraus abgeleitet werden. So kann bspw. der jeweilige Steuerbefehl 22₁ bis 22₃ eine konkrete Anweisung für den jeweiligen dezentralen Antrieb enthalten. Bevorzugt ist es jedoch, dass die dezentrale Antriebseinrichtung unter Kenntnis der Geometrie des Fahrzeugs, etwa der relativen Lage der dezentralen Antriebseinrichtungen aus einem gewünschten, in den Steuerbefehlen 22₁ bis 22₃ angegebenen Fahrtrichtung, Fahrtvektor oder Trajektorie eine anzuwendende Ansteuerung für den jeweiligen Aktuator erstellt, so dass bspw. jede der dezentralen Antriebseinrichtungen eine übereinstimmende Ansteuerung erhalten kann aber basierend auf der unterschiedlichen Lage der jeweiligen dezentralen Antriebseinrichtung 14 unterschiedlich umsetzt, also unterschiedliche Soll-Beiträge erstellt, die die jeweilige Antriebseinrichtung liefern soll.

An dieser Stelle wird deutlich, dass die Bewegung des Fahrzeugs mit der Ansteuerung der einzelnen Antriebseinrichtungen, also deren Soll-Beiträgen direkt verknüpft ist, so dass unter in Ausführungsbeispielen gegebener Kenntnis der Fahrzeuggeometrie eine wechselseitige Überführung zwischen Einzel-Sollbeitrag und Fahrzeugbewegung bzw. tatsächlichem Bewegungsbeitrag und tatsächlicher Fahrzeugbewegung und/oder der Auswirkung, die eine Abweichung zwischen dem Soll-Bewegungsbeitrag und dem tatsächlichen Bewegungsbeitrag auf die Fahrt des Fahrzeugs hat, problemlos von den dezentralen Antriebseinrichtungen bestimmt werden kann und sich Ausführungen auf eines der jeweiligen Begriff-Paares unmittelbar auf den anderen Begriff beziehen.

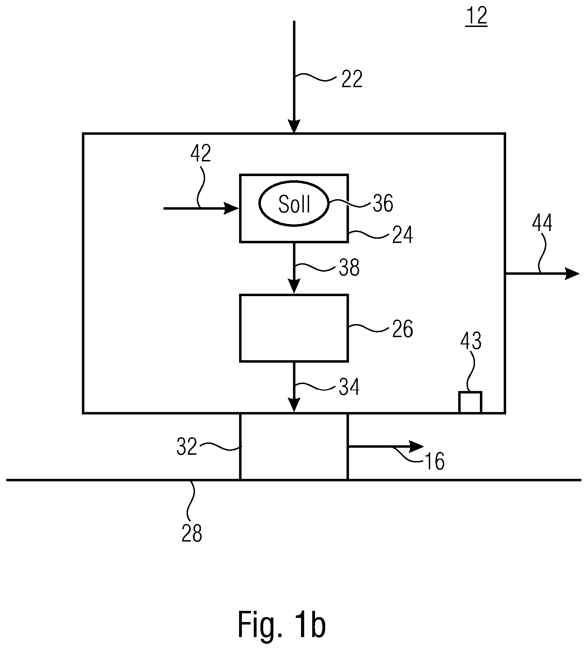

Fig. 1b zeigt ein schematisches Blockdiagramm einer omnidirektionalen Antriebseinrichtung 12 des Fahrzeugs 10, beispielsweise der Antriebseinrichtung 12₁. Die omnidirektionale Antriebseinrichtung umfasst eine dezentrale Berechnungseinrichtung 24 und einen der dezentralen Berechnungseinrichtung zugeordneten und zum Bereitstellen des Soll-Bewegungsbeitrags 16 eingerichteten Aktuator 26. Hierbei ist es möglich, dass der Aktuator 26 direkt in Kontakt mit einer Fortbewegungsfläche 28, beispielsweise einem Untergrund, einem Boden oder dergleichen stehen kann, um den Bewegungsbeitrag 16 direkt zu erzeugen. Alternativ ist ein Übertragungsglied 32 vorgesehen, das eine Kraft 34 des Aktuators 26 empfängt und in den Bewegungsbeitrag 16 umsetzt. Beispielsweise kann das Übertragungsglied 32 ein Rad, insbesondere ein Allseitenrad oder ein Mecanumrad umfassen. Für die meisten der hierin beschriebenen Ausführungsbeispiele ist es jedoch unerheblich, ob der Aktuator 26 und das Übertragungsglied 32 gemeinschaftlich als Aktuator verstanden werden oder als separate Komponenten. Das bedeutet, auch wenn sich manche der hierin erläuterten Ausführungen auf den Aktuator 26 beziehen, schließt dies die gemeinschaftliche Betrachtung mit dem Übertragungsglied 32 nicht aus. Anders ausgedrückt kann die Antriebseinrichtung 12 ein Rad, einen Motor/Aktuator und einen Controller, beispielsweise die Berechnungseinrichtung 24 umfassen. Die Berechnungseinrichtung 24 kann insbesondere einen Prozessor oder CPU, einen Mikrocontroller oder eine andere programmierbare Steuereinrichtung, etwa ein feldprogrammierbares Gatterarray (FPGA) oder dergleichen umfassen.

Die dezentrale Berechnungseinrichtung 24 ist ausgebildet, um aus dem Steuerbefehl 22, der möglicherweise eine Sollbewegung des 36 Fahrzeugs anzeigt, einen Soll-Bewegungsbeitrag 16für das Fahrzeug zu bestimmen und um aus dem Soll-Bewegungsbeitrag 16 eine Ansteuerung 38 des zugeordneten Aktuators zu bestimmen. Während der Steuerbefehl 22 für alle Antriebseinrichtungen 12₁ bis 12₃ des Fahrzeugs 10 beispielsweise gleich sein kann, kann auch die bestimmte Sollbewegung 36 in allen dezentralen Antriebseinrichtungen beziehungsweise dezentralen Berechnungseinrichtungen 24 identisch sein. Die hieraus abgeleiteten Ansteuerungen 38 können jedoch in den unterschiedlichen Antriebseinrichtungen 12₁ bis 12₃ voneinander verschieden sein, etwa basierend auf der Kenntnis oder Berücksichtigung des Orts der dezentralen Antriebseinrichtung bzw. des Aktuators am Fahrzeug .

Die dezentrale Berechnungseinrichtung 12 ist ferner ausgebildet, um eine Abweichung von dem Fahrtvektor zu bestimmen, etwa indem die dezentrale Berechnungseinrichtung 24 eine Information über eine Istbewegung 42 des Fahrzeugs erhält, die bspw. dadurch erhalten werden kann, indem der tatsächliche Bewegungsbeitrag bestimmt wird. Die dezentrale Berechnungseinrichtung 24 ist ferner ausgebildet, um bei einer Abweichung zwischen dem Soll-Bewegungsbeitrag 16 und der Istbewegung 42 bzw. dem Ist-Bewegungsbeitrag oder tatsächlichen Bewegungsbeitrag Maßnahmen einzuleiten, um die Abweichung von dem Fahrtvektor zu korrigieren. Eine solche Maßnahme kann hierzu eine Anweisung an sich selbst enthalten, beispielsweise eine Anpassung der Ansteuerung 38 zur Veränderung einer Geschwindigkeit und/oder einer Richtung des eigenen Bewegungsbeitrags. Alternativ oder zusätzlich kann die Antriebseinrichtung 12, beispielsweise durch die dezentrale Berechnungseinrichtung 24 eine Anweisung 44 an eine oder mehrere andere Antriebseinrichtungen senden, die eine Anweisung enthält, deren Ansteuerung anzupassen. Dies kann eine explizite Instruktion sein, aber auch eine Information, die an der anderen Antriebseinrichtung einen Rückschluss auf die dort auszuführenden Korrekturmaßnahmen erlaubt. Beispielsweise kann die Anweisung 44 Informationen über einen Korrekturvektor enthalten, der eine Abweichung zwischen der Sollbewegung 36, beispielsweise als Vektor betrachtet, und der Istbewegung 42, die ob der obigen Ausführungen mit dem tatsächlichen Bewegungsbeitrag synonym ist, beispielsweise als Vektor betrachtet, enthält.

Hierdurch kann die Abweichung in hohem Maße reduziert oder kompensiert werden, zumindest aber teilweise reduziert werden, was bereits eine Verbesserung ist. Die dezentrale Berechnungseinrichtung kann ausgebildet sein, um aus dieser Information einen Korrekturvektor für einen die Sollbewegung repräsentierenden Fahrtvektor zu erhalten, und um die Ansteuerung basierend auf einer Kombination des Fahrtvektors mit dem Korrekturvektor auszuführen, um die Ansteuerung anzupassen. Das bedeutet eine derart angepasste Ansteuerung kann bereits korrigiert sein, um den Fehler zumindest in Teilen zu kompensieren. Dies kann ohne Einschränkungen basierend auf dem lokalen Fahrtvektor als auch auf dem globalen Fahrtvektor, der anders als der die Bewegung der dezentralen Antriebseinrichtung beschreibenden lokalen Fahrtvektor den Fahrtvektor des Fahrzeugs beschreiben kann, erfolgen.

Die dezentrale Antriebseinrichtung 12 kann gemäß Ausführungsbeispielen eine der Antriebseinrichtung 12 zugeordnete Sensoreinrichtung 43 aufweisen, die es im Fahrzeug 10 ermöglicht, dezentral in den Antriebseinrichtungen 12₁ bis 12₃ die Bewegung der mobilen Vorrichtung zu erfassen, und die Abweichung von dem tatsächlichen Bewegungsbeitrag von dem Soll-Bewegungsbeitrags basierend auf der dezentral bestimmten Bewegung zu bestimmen. Beispielsweise kann die Sensoreinrichtung optische Sensoren umfassen, insbesondere einen optischen Flusssensor beziehungsweise einen Sensor zum Erfassen eines optischen Flusses, etwa einer Bildsequenz. Der optische Fluss kann als Vektorfeld der in einer Bildebene projizierten Geschwindigkeit von sichtbaren Punkten des Objektraums im Bezugssystem der Abbildungsoptik verstanden werden, das bedeutet, eine Verschiebung von Punkten in sequenziell aufgenommenen Bildern kann Rückschlüsse über die Geschwindigkeit ermöglichen. Hierbei ist anzumerken, dass die Ergebnisse der Sensoreinrichtung 43 möglicherweise Ergebnisse liefern, die für den Ort der Sensoreinrichtung 43 und mithin der Antriebseinrichtung gültig sind, beispielsweise aber von einem gesamten Bewegungsvektor der Bewegung 14 basierend auf einer Abweichung von einem geometrischen Mittelpunkt des Fahrzeugs 10 abweichen können. Ungeachtet dessen kann die Antriebseinrichtung ausgebildet sein, um die Bewegung unter Verwendung der Sensoreinrichtung 43 und insbesondere des optischen Flusssensors zu bestimmen. Eine Abweichung beziehungsweise Beeinflussung des Sensorsignals basierend auf der lokalen Position kann insofern sogar wünschenswert sein, da hierdurch präzise Angaben erhalten werden können, wie die Ansteuerung vor Ort, innerhalb der Antriebseinrichtung 12 anzupassen ist.

Manche der verwendeten Sensoren können dabei eine geteilte Ressource sein, d. h., ein geteilter Sensor für mehrere Sensoreinrichtungen 43. So kann bspw. der optische Fluss Informationen für mehrere dezentrale Antriebseinrichtungen liefern während eine Drehzahl-überwachung dezentral erfolgt, da die Information dezentral vorliegt.

Beispielhaft kann die dezentrale Berechnungseinrichtung erkennen, dass die Drehzahl eines Rades von einem Wert wie in dem Soll-Bewegungsbeitrag angestrebt und/oder mittels der zugeführten Energie, etwa elektrischer Strom erwartet, abweicht was bspw. ein Hinweis auf einen Schlupf oder andere Effekte des Rades sein kann. Alternativ oder zusätzlich kann ein optischer Sensor anzeigen, dass die tatsächlich erreichte lokale Geschwindigkeit in Betrag und/oder Richtung von dem Soll-Bewegungsbeitrag abweicht.

Die Antriebseinrichtung 12 kann ausgebildet sein, um die Abweichung, basierend auf einer Drehzahl des dezentralen Aktuators 26, einer Stromaufnahme des dezentralen Aktuators 26, die direkt als Strom oder indirekt, beispielsweise über eine elektrische Spannung oder dergleichen, gemessen werden kann, und/oder der Bewegung, etwa erfasst über die Sensoreinrichtung 43, zu bestimmen. So kann die Drehzahl des dezentralen Aktuators in Kombination mit der Leistungsaufnahme oder Stromaufnahme des dezentralen Aktuators bereits einen Hinweis darauf geben, ob die bereitgestellte Leistung im gewünschten Umfang in eine Drehzahl umgesetzt wird und/oder ob die erhaltene Drehzahl in der gewünschten Bewegung des Fahrzeugs mündet. Es können somit mehrere Fehlerursachen gleichzeitig überwacht werden.

Zusammengenommen kann jede der dezentralen Berechnungseinrichtungen ausgebildet sein, um eine Abweichung des von dem zugeordneten Aktuator bereitgestellten Bewegungsbeitrags zu der Sollbewegung insgesamt und/oder bezüglich des Soll-Bewegungsbeitrages festzustellen, und um die Abweichung an andere Antriebseinrichtungen der Vielzahl omnidirektionaler Antriebseinrichtungen zu übermitteln. Im Beispiel des oben erläuterten Schlupfes kann dies bspw. eine Anweisung enthalten, die Antriebsleistung zurückzunehmen um eine Veränderung der tatsächlichen Trajektorie gegenüber der Sollbewegung zu reduzieren oder zu vermeiden. Eine derartige Anweisung kann bspw. so ausformuliert sein, dass eine Information, etwa ein Korrekturvektor, eine Information an die anderen Antriebseinrichtungen enthalten kann, der so ausgestaltet ist, dass der draus abgeleitete Beitrag für die erstellende dezentrale Antriebseinrichtung innerhalb der Grenzen ist, die die dezentrale Antriebseinrichtung aktuell zu leisten vermag. Dies ermöglicht dort eine adäquate Reaktion auf diese Abweichung. Alternativ oder zusätzlich wird ermöglicht, dass die verbleibenden Antriebseinrichtungen über die eigene Abweichung informiert werden und bereits frühzeitig auf diesen Fall reagieren können, etwa indem die dezentrale Berechnungseinrichtung feststellt, dass die bereitgestellte Antriebsleistung oder elektrischer Strom nicht zu einer gewünschten Drehzahl und/oder Geschwindigkeit führt. Insbesondere die Kenntnis über die eigene Ansteuerung ist lokal vorhanden und kann bereits dort auf Abweichungen evaluiert werden.

Entsprechend sind Antriebseinrichtungen ausgebildet, um eine entsprechende Information zu empfangen, die eine Abweichung zwischen einer Sollbewegung und einem von einer anderen Antriebseinrichtung erzeugten Bewegungsbeitrag angibt. Die dortige dezentrale Berechnungseinrichtung kann ausgebildet sein, um die Ansteuerung des zugeordneten Aktuators basierend auf der Abweichung der anderen Antriebseinrichtung anzupassen.

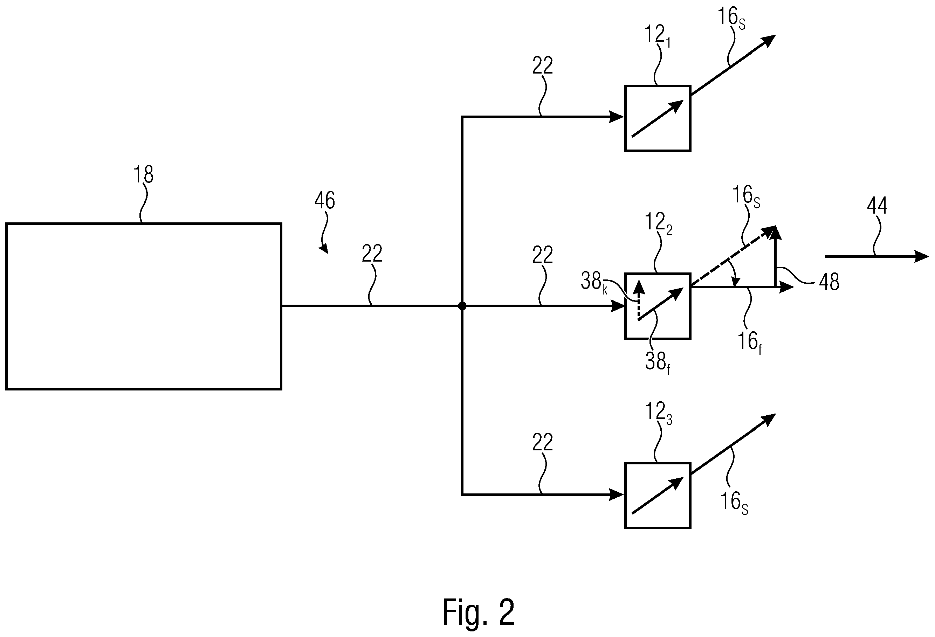

Fig. 2 zeigt ein schematisches Blockschaltbild einer Verschaltung der Steuereinrichtung 18 mit den Antriebseinrichtungen 12₁, 12₂ und 12₃ gemäß einem Ausführungsbeispiel. Beispielsweise ist die Steuereinrichtung 18 mit den Antriebseinrichtungen 12₁ bis 12₃ über ein Bussystem 46 verbunden, beispielweise ein CAN-Bus (CAN = controller area network) oder anderen Feldbussen. Dies ermöglicht beispielsweise die Übermittlung ein und desselben Steuerbefehls 22 an mehrere Antriebseinrichtungen 12₁, 12₂ und/oder 12₃ als eine gemeinsame Nachricht oder als getrennte Nachrichten, die zumindest für das gleiche Zeitintervall der Ansteuerung wirksam sind.

Ferner erläutert die Fig. 2 einen beispielhaften Fehlerfall, in welchem die Antriebseinrichtung 12₂ einen fehlerhaften Bewegungsbeitrag 16_{f} liefert, der von einem gewünschten Bewegungsbeitrag 16_{S} abweicht, so dass basierend hierauf eine fehlerhafte Gesamtsumme an Bewegungsbeiträgen zu einer Abweichung der Bewegung 14 von der Sollbewegung führt.

Die Antriebseinrichtung 12 kann hierzu beispielsweise einen dezentralen Korrekturvektor 48 bestimmen und diesen mit der eigenen Ansteuerung kombinieren, um die zu Fehlern führende Ansteuerung 38_{f} zu einer korrigierten Ansteuerung 38ₖ zu korrigieren, so dass der Antrieb basierend auf der veränderten Ansteuerung wieder den korrekten Bewegungsbeitrag 16_{S} liefern kann. Optional kann die Antriebseinrichtung 12 die Anweisung 44 an eine oder mehrere Antriebseinrichtungen 12₁ und/oder 12₂ übermitteln, so dass auch diese Antriebseinrichtungen ihre Ansteuerung verändern können, sollte dies erforderlich sein. Dies kann beispielsweise relevant sein, um nach einer erfolgten Abweichung des Fahrzeugs von der gewünschten Trajektorie zu selbiger zurückzukehren und/oder um in Kombination mit angepassten anderen Antriebseinrichtungen die gewünschte Bewegung 14 zu erhalten.

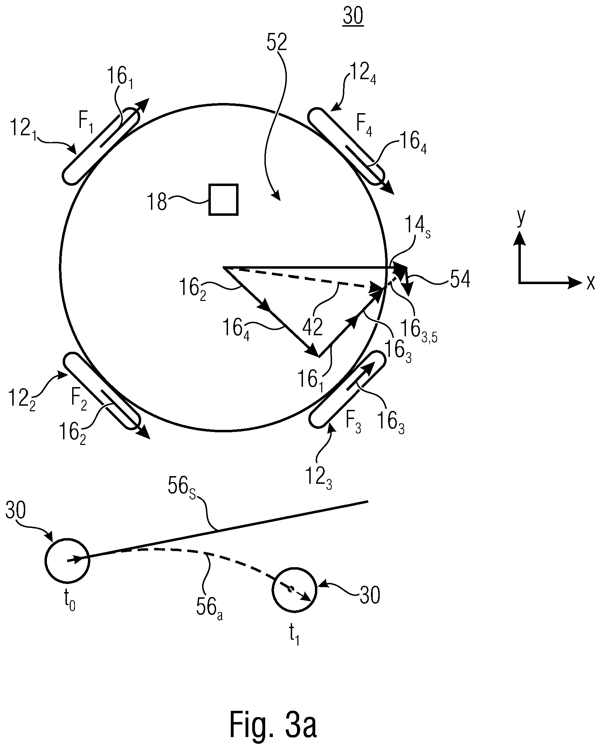

Fig. 3a zeigt eine schematische Draufsicht auf ein Fahrzeug 30 gemäß einem Ausführungsbeispiel. Das Fahrzeug 30 umfasst beispielhaft vier symmetrisch angeordnete Antriebseinrichtungen 12₁ bis 12₄, um eine omnidirektionale Bewegung des Fahrzeugs 30 zu ermöglichen. Zum Erreichen einer gewünschten Bewegung 14ₛ vermittels über einer Übermittlung geeigneter Steuerbefehle durch die Steuereinrichtung 18 erfolgt eine Ansteuerung der Antriebseinrichtungen 12₁ bis 12₄. Die Bewegungsbeiträge 16₁ bis 16₄ sind beispielhaft dargestellt als Kraftvektoren F₁, F₂, F₃ bzw. F₄. Fig. 3a zeigt dabei einen Fehlerfall, in welcher beispielsweise die Antriebseinrichtung 12₃ einen fehlerhaften Bewegungsbeitrag 16₃ liefert, der in dem dargestellten Kräftediagramm 52 dazu führt, dass die tatsächliche Istbewegung 42 von der Sollbewegung 14ₛ abweicht, und zwar beispielhaft, um die Abweichung zwischen dem gewünschten Bewegungsbeitrag 16_{3,s}, der Sollgröße und dem tatsächlichen Bewegungsbeitrag 16₃. Dieser führt zu einer Abweichung 54, welche die tatsächliche Richtung und Geschwindigkeit des Fahrzeugs 30 ändert, was ohne Korrektureingriff zu einer abweichenden Trajektorie 56ₐ des Fahrzeugs 30 vom dargestellten Zeitpunkt T₀ zum nächsten Zeitpunkt T₁, etwa das nächste Regelintervall, und verglichen mit einer Solltrajektorie 56ₛ führen würde.

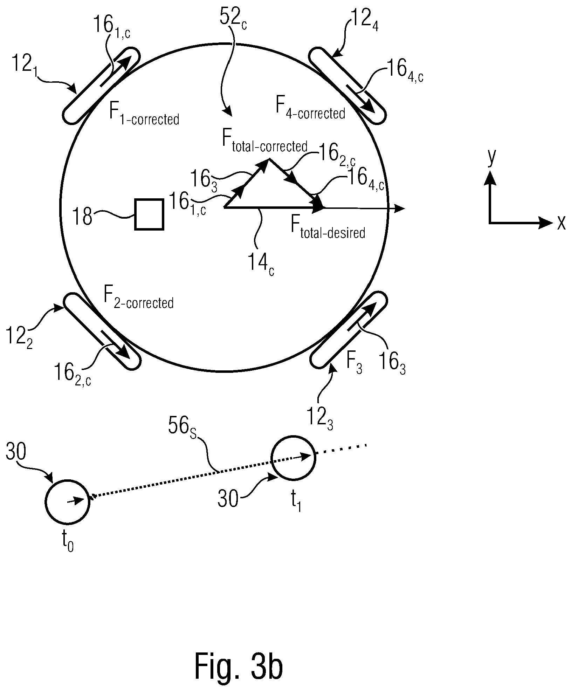

Fig. 3b zeigt eine mögliche Wirkung der hierin beschriebenen Ausführungsbeispiele. So erlangen beispielsweise die anderen Antriebseinrichtungen 12₁, 12₂ und 12₄ Kenntnis von der Abweichung der Antriebseinrichtung 12₃ und können basierend hierauf ihre eigene Ansteuerung anpassen, was in korrigierten Ansteuerungen und somit korrigierten Bewegungsbeiträgen 16_{1,c}, 16_{2,c} und 16_{4,c} resultieren kann, die an den fehlerhaften Bewegungsbeitrag 16₃ angepasst sind.

So können beispielsweise die entsprechenden Kraftvektoren in ihrem Betrag reduziert werden, um bei einem Kraftvektor F₁-corrected, F₂-corrected und F₄-corrected (corrected = korrigiert) anzugelangen, so dass das korrigierte Kräftediagramm 52_{c} immerhin die gewünschte Richtung in der erhaltenen Bewegung 14_{c} beibehalten kann, wenngleich möglicherweise in verlangsamter Fahrt. Dies ermöglicht einen Verbleib des Fahrzeugs 30 auf der Solltrajektorie 56ₛ, auch wenn möglicherweise eine Geschwindigkeit reduziert ist. Da die Korrektur lokal vorgenommen werden kann, erfolgt zumindest im Vergleich zu einer zentralisierten Ansteuerung eine möglicherweise verringerte Abweichung von der Solltrajektorie.

Es wird deutlich, dass die Vielzahl von omnidirektionalen Antriebseinrichtungen eine dezentrale Antischlupfregelung für das Antriebssystem bereitstellen können. Obwohl in der Darstellung der Fig. 3b eine Kraftreduzierung in den anderen Antriebseinrichtungen 12₁, 12₂ und 12₄ erfolgt, kann gemäß anderen Ausführungsbeispielen auch eine Richtungsänderung erfolgen, beispielsweise wenn dies für eine durchzuführende Rotation oder dergleichen erforderlich ist.

Gemäß Ausführungsbeispielen ist jede der dezentralen Berechnungseinrichtungen der Antriebseinrichtung ausgebildet, um eine Abweichung der von dem zugeordneten Aktuator bereitgestellten Bewegungsbeitrag zu der Sollbewegung festzustellen, und um für ein nachfolgendes Zeitintervall die Ansteuerung des zugeordneten Aktuators basierend auf der Abweichung zu ändern, um die Abweichung zu reduzieren. Das nachfolgende Zeitintervall kann basierend auf den Regelungszyklen in den dezentralen Antriebseinrichtungen verhältnismäßig kurz sein und insbesondere kürzer als die Regelungszyklen der Steuereinrichtungen 18, für die beispielsweise zwischen den Zeitpunkten Tₒ und T₁ Zeiträume von beispielsweise 20 Millisekunden vergehen können. Die dezentralen Antriebseinrichtungen können demgegenüber in Zeitintervallen betrieben werden, die beispielsweise geringer ist, als der Regelungszyklus der zentralen Steuereinrichtung, etwa höchstens 10 ms, höchstens 5 ms oder höchstens 1 ms oder weniger. Das bedeutet, dass die dezentrale Regelung um einen Faktor von zumindest 2, zumindest 4 oder zumindest 20 schneller sein kann als die zentrale Steuerung, was auch gelten kann, wenn die zentrale Steuerung mit einem anderen Intervall betrieben wird.

Die dezentralen Berechnungseinrichtungen können ausgebildet sein, um einen Korrekturvektor für einen die Sollbewegung repräsentierenden Fahrtvektor zu bestimmen, und um die Ansteuerung basierend auf einer Kombination des Fahrtvektors mit dem Korrekturvektor auszuführen, um die Abweichung zu reduzieren, wie es beispielsweise anhand der Kräftediagramme 52 und 52_{c} dargestellt ist.

In anderen Worten ist ein Aspekt hierin beschriebener Ausführungsbeispiele darauf begründet, dass in hochautomatisierten Fahrzeugen heutzutage viele Teilsysteme einen eigenen Computer darstellen oder als solcher implementiert sind. In der Entwicklung ist es häufig einfacher und deswegen ausgeführt, einen programmierbaren Mikrocontroller oder dergleichen zu verwenden, als nur für einen bestimmten Zweck eine Analog-/Digitalschaltung zu entwickeln. So entstehen möglicherweise ungenutzte Ressourcen, da die Mikrocontroller üblicherweise überdimensioniert werden. Diese ungenutzten Ressourcen können für die Implementierung hierin beschriebener Ausführungsbeispiele verwendet werden. So bezieht sich beispielsweise ein entsprechendes Verfahren zum Betreiben eines Fahrzeugs mit einem omnidirektionalen Antriebssystem, das ausgebildet ist, um eine Bewegung des Fahrzeugs bereitzustellen, wobei das omnidirektionale Antriebssystem eine Vielzahl von omnidirektionalen Antriebseinrichtungen aufweist und jede der Vielzahl omnidirektionaler Antriebseinrichtungen eine dezentrale Bewegungseinrichtung und einen zugeordneten, zum Bereitstellen eines Bewegungsbeitrags für die Bewegung eingerichteten Aktuator aufweist, die Schritte eines Bereitstellens eines Steuerbefehls an das omnidirektionale Antriebssystem, der eine Anweisung zur Ausführung der Bewegung enthält, ein Bestimmen einer Sollbewegung für das Fahrzeug mit jeder der dezentralen Berechnungseinrichtungen, ein Bestimmen einer Ansteuerung des zugeordneten Aktuators aus der Sollbewegung mit jeder der dezentralen Berechnungseinrichtungen und ein Bestimmen und Korrigieren einer Abweichung von dem Fahrtvektor mit jeder der dezentralen Berechnungseinrichtungen.

In den beschriebenen autonomen Fahrzeugen, etwa dem Fahrzeug 10 und/oder 30, ist beispielsweise jede Antriebseinheit mit einem Mikrocontroller, der Berechnungseinrichtung 24, ausgestattet. Dieser kann die Ansteuerung des Motors/Aktuators und die Messung aller relevanten Werte des jeweiligen Antriebs übernehmen. Ziel ist es, eine definierte Bahnkurve zu verfolgen. Des Weiteren kommunizieren die zentrale Regeleinheit, die Steuereinheit 18 und alle Antriebseinheiten über einen seriellen Bus, etwa das Bus-System 46, miteinander.

Sollte es nun dazu kommen, dass ein Antrieb den gewünschten Fahrtvektor nicht einhalten kann, so würden in einem konventionellen Verfahren erst im nächsten Regelzyklus die relevanten Werte und die Abweichung berücksichtigt werden. Ein potenzieller Fehler summiert sich daher bis zum nächsten Regelzyklus auf.

In erfindungsgemäßen Fahrzeugen und/oder Verfahren übermittelten gegen die zentrale Regelung eine komplexere Anweisung. Anstatt der Stellwerte, die an jedem Antrieb separat übermittelt werden, wird mit nur einem Paket, etwa per Broadcast, der gewünschte Fahrvektor an alle Antriebe gleichzeitig übermittelt. Dies führt bereits zur ersten Latenzeinsparung. Sollte es nun dazu kommen, dass ein Antrieb den gewünschten Fahrtvektor nicht einhalten kann, sendet die betroffene Antriebseinheit sofort einen Korrekturvektor. Dies ist insbesondere möglich, da jede Antriebseinheit über die gleichen Sensoren verfügt und gleichzeitig ein Messpunkt für alle hochdynamisch relevanten Werte ist. Eine Abweichung wird ermittelt durch den Drehzahlverlauf, Stromverlauf und die tatsächliche Bewegung über den Boden. Die Bewegung wird mithilfe eines optischen Flusssensors in der Fahrebene (X, Y) gemessen. Dadurch kann jede Antriebseinheit, unter Annahme des Fahrtvektors und somit Annahme der Bewegung der anderen Antriebseinheiten, zusätzlich nicht nur die eigene Abweichung feststellen, sondern auch eine Aufholkorrektur ermitteln. Diese Information wird sofort bzw. nächstmöglich per Broadcast an alle weiteren Antriebseinheiten übermittelt. Die anderen Antriebseinheiten übernehmen daraufhin den Korrekturvektor und passen ihre eigene Ansteuerung an.

Eine derartige Korrektur ist zu einem jeweiligen Zeitpunkt eine gute bis bestmögliche Maßnahme. Eine derartig schnelle Reaktion hat zur Folge, dass die Abweichung im Vergleich zum konventionellen Verfahren geringer ausfällt, wie es anhand des Vergleichs zwischen Fig. 3a und 3b ersichtlich ist. Der resultierende Fahrtvektor hat dadurch annähernd die gleiche Orientierung bzw. lediglich geringe Abweichungen, wodurch die Bahnkurve nicht wesentlich verlassen wird oder nicht verlassen wird. Dieser Ablauf kann so lange stattfinden, bis der nächste Regelzyklus stattfindet, in welchem beispielsweise die Steuereinrichtung 18 eine übergeordnete Gegenmaßnahme ergreifen kann. Das bedeutet, gemäß einem Ausführungsbeispiel sind die omnidirektionalen Antriebseinrichtungen ausgebildet, um die Abweichung zwischen zwei Regelungsschritten der Steuerungseinrichtung zu korrigieren. Optional kann die Steuerungseinrichtung dann selbst eine globale Korrektur vornehmen, die den aufgetretenen Fehlerfall berücksichtigt.

Ausführungsbeispiele ermöglichen es, dass eine Möglichkeit bereitgestellt wird, eine effektive Antischlupfregelung für Fahrzeuge mit Allseitenrädern zu bieten, insbesondere mit Verwendung optischer Flusssensoren, bei der allerdings der Kurs oder die Richtung des Fahrzeugs maximal beibehalten wird. Würde man im Gegensatz dazu die durchdrehenden Räder einzeln abbremsen, so würde sich der Fahrtvektor verziehen oder verfälschen, was letzten Endes eine Störung im Regelkreis erzeugt, die ausgeregelt werden müsste, wofür die Steuerungseinrichtung 18 zuständig wäre, welche jedoch Latenzen aufweist. Des Weiteren bietet diese Methode eine Regelung mit kleinerer Latenz, da etwaige Störungen direkt auf den Prozessoren der Motor-Steuerungseinheiten, der Antriebseinrichtungen, verarbeitet werden können, insbesondere, wenn die Steuereinheiten aller Motoren über ein Bus-System, etwa CAN, miteinander verbunden sind.

Ausführungsbeispiele können vor allem in Fahrzeugen mit einzeln angetriebenen Rädern implementiert werden. Insbesondere omnidirektionale Fahrzeuge mit Allseitenrädern sind hier besonders hervorzuheben, da hier die Räder immer einzeln angetrieben werden. Betroffen sind insbesondere Anwendungsgebiete, welche eine hohe Fahrzeugdynamik erfordern, etwa Sortieranlagen mit Robotern.

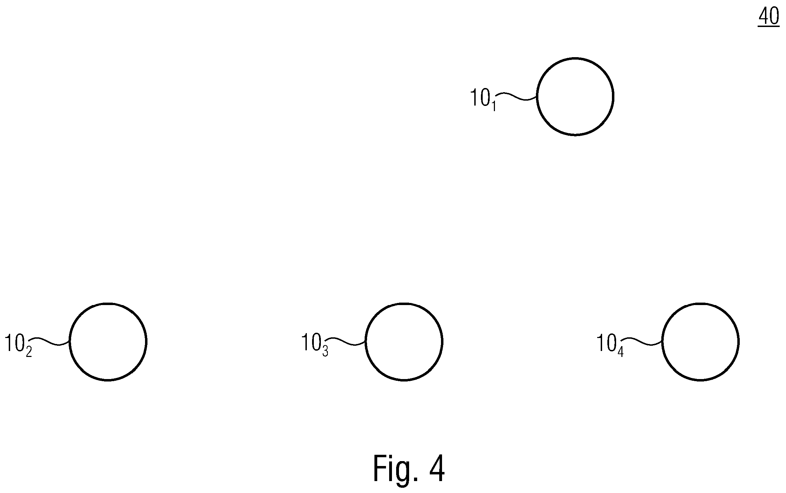

Fig. 4 zeigt ein schematisches Blockdiagramm eines Sortiersystems 40 gemäß einem Ausführungsbeispiel, das eine Vielzahl von Fahrzeugen aufweist, beispielsweise Fahrzeuge 10 und/oder Fahrzeuge 30. Eine Anzahl von Fahrzeugen kann dabei zumindest drei, zumindest vier, zumindest fünf, zumindest zehn oder mehr, etwa 20, 25 oder 100 betragen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Fahrzeug mit:
einem omnidirektionalen Antriebssystem, das ausgebildet ist, um eine Bewegung (14) des Fahrzeugs bereitzustellen; wobei das omnidirektionale Antriebssystem eine Vielzahl von omnidirektionalen Antriebseinrichtungen (12) aufweist, wobei jede der Vielzahl omnidirektionaler Antriebseinrichtung (12) eine dezentrale Berechnungseinrichtung (24) und einen zugeordneten, zum Bereitstellen eines Bewegungsbeitrags (16) für die Bewegung (14) eingerichteten Aktuator (26) aufweist;
eine Steuereinrichtung (18) zum Bereitstellen eines Steuerbefehls (22) an das omnidirektionale Antriebssystem, der eine Anweisung zur Ausführung der Bewegung (14) enthält;
wobei jede der dezentralen Berechnungseinrichtungen (24) ausgebildet ist, um eine Sollbewegung für das Fahrzeug zu bestimmen; und um aus der Sollbewegung für einen Soll-Bewegungsbeitrag (16) eine Ansteuerung des zugeordneten Aktuators (26) zu bestimmen; und um eine Abweichung (54) zwischen dem Soll-Bewegungsbeitrag und einem tatsächlichen Bewegungsbeitrag zu bestimmen und eine Korrektur basierend auf der Abweichung auszuführen.

2. Fahrzeug gemäß Anspruch 1, bei dem jede der Vielzahl von omnidirektionalen Antriebseinrichtungen (12) eine dezentrale Antischlupfregelung für das Antriebssystem bereitstellt.

3. Fahrzeug gemäß Anspruch 1 oder 2, bei dem die Steuereinrichtung (18) ausgebildet ist, um für ein übereinstimmendes Zeitintervall jeder der Vielzahl der omnidirektionalen Antriebseinrichtungen (12) denselben Steuerbefehl (22) bereitzustellen.

4. Fahrzeug gemäß einem der vorangehenden Ansprüche, bei dem jede der dezentralen Berechnungseinrichtungen (24) ausgebildet ist, um die Abweichung (54) der von dem zugeordneten Aktuator (26) tatsächlich bereitgestellten Bewegungsbeitrag (16_{f}) bezüglich des Soll-Bewegungsbeitrages (16ₛ) festzustellen, und um für ein nachfolgendes Zeitintervall die Ansteuerung des zugeordneten Aktuators (26) basierend auf der Abweichung (54) zu ändern, um die Abweichung (54) zu reduzieren.

5. Fahrzeug gemäß Anspruch 4, bei dem die dezentrale Berechnungseinrichtung (24) ausgebildet ist, um einen Korrekturvektor für einen die Sollbewegung repräsentierenden Fahrtvektor zu bestimmen, und um die Ansteuerung basierend auf einer Kombination des Fahrtvektors mit dem Korrekturvektor auszuführen, um die Abweichung (54) zu reduzieren.

6. Fahrzeug gemäß einem der vorangehenden Ansprüche, bei dem die omnidirektionalen Antriebseinrichtungen (12) ausgebildet sind, um die Abweichung (54) zwischen zwei Regelungsschritten der Steuerungseinrichtungen zu korrigieren.

7. Fahrzeug gemäß einem der vorangehenden Ansprüche, bei dem jede der dezentralen Berechnungseinrichtungen (24) ausgebildet ist, um eine Abweichung (54) des von dem zugeordneten Aktuator (26) bereitgestellten Bewegungsbeitrags (16_{f}) zu dem Soll-Bewegungsbeitrag (16ₛ) festzustellen, und um die Abweichung (54) an andere Antriebseinrichtungen (12) der Vielzahl omnidirektionaler Antriebseinrichtungen (12) zu übermitteln.

8. Fahrzeug gemäß einem der vorangehenden Ansprüche, bei dem eine der Antriebseinrichtungen (12) ausgebildet ist, um eine Information zu empfangen, die eine Abweichung (54) zwischen dem Soll-Bewegungsbeitrag (16ₛ) und einem von einer anderen Antriebseinrichtung (12) erzeugten tatsächlichen Bewegungsbeitrag (16_{f}) angibt, wobei die dezentrale Berechnungseinrichtung (24) ausgebildet ist, um die Ansteuerung des zugeordneten Aktuators (26) basierend auf der Abweichung (54) der anderen Antriebseinrichtung (12) anzupassen.

9. Fahrzeug gemäß Anspruch 8, bei dem die dezentrale Berechnungseinrichtung (24) ausgebildet ist, um aus der Information einen Korrekturvektor für einen die Sollbewegung oder den Soll-Bewegungsbeitrag (16ₛ) repräsentierenden Fahrtvektor zu erhalten, und um die Ansteuerung basierend auf einer Kombination des Fahrtvektors mit dem Korrekturvektor auszuführen, um die Ansteuerung anzupassen.

10. Fahrzeug gemäß einem der vorangehenden Ansprüche, bei dem die Steuereinrichtung (18) mit den dezentralen Berechnungseinrichtungen (24) über ein Bussystem (46) verbunden ist.

11. Fahrzeug gemäß einem der vorangehenden Ansprüche, bei dem die omnidirektionalen Antriebseinrichtungen (12) Allseitenräder umfassen.

12. Fahrzeug gemäß einem der vorangehenden Ansprüche, bei dem die omnidirektionalen Antriebseinrichtungen (12) Mecanumräder umfassen.

13. Sortiersystem mit einer Vielzahl von Fahrzeugen nach einem der vorangehenden Ansprüche.

14. Verfahren zum Betreiben eines Fahrzeugs mit einem omnidirektionalen Antriebssystem, das ausgebildet ist, um eine Bewegung (14) des Fahrzeugs bereitzustellen; wobei das omnidirektionale Antriebssystem eine Vielzahl von omnidirektionalen Antriebseinrichtungen (12) aufweist, wobei jede der Vielzahl omnidirektionaler Antriebseinrichtung (12) eine dezentrale Berechnungseinrichtung (24) und einen zugeordneten, zum Bereitstellen eines Bewegungsbeitrags (16) für die Bewegung (14) eingerichteten Aktuator (26) aufweist, mit folgenden Schritten:
Bereitstellen eines Steuerbefehls (22) an das omnidirektionale Antriebssystem, der eine Anweisung zur Ausführung der Bewegung (14) enthält;
Bestimmen einer Sollbewegung für das Fahrzeug mit jeder der dezentralen Berechnungseinrichtungen (24);
Bestimmen einer Ansteuerung des zugeordneten Aktuators (26) für einen Soll-Bewegungsbeitrag (16ₛ) aus der Sollbewegung mit jeder der dezentralen Berechnungseinrichtungen (24); und
Bestimmen einer Abweichung (54) zwischen dem Soll-Bewegungsbeitrag und einem tatsächlichen Bewegungsbeitrag (16_{f}) mit jeder der dezentralen Berechnungseinrichtungen (24); und Ausführen einer Korrektur basierend auf der Abweichung.

15. Computerprogramm mit einem Programmcode zur Durchführung des Verfahrens nach Anspruch 14, wenn das Programm auf einem Computer läuft.

## Claims

1. A vehicle, comprising:
an omnidirectional drive system configured to provide a movement (14) of the vehicle; wherein the omnidirectional drive system comprises a multitude of omnidirectional drive means (12), wherein each of the multitude of omnidirectional drive means (12) comprises a decentralized computing means (24) and an associated actuator (26) set up for providing a movement contribution (16) for the movement (14);
a controlling means (18) for providing to the omnidirectional drive system a controlling command (22) containing an instruction for performing the movement (14);
wherein each of the decentralized computing means (24) is configured to determine a target movement for the vehicle; and to determine, from the target movement, a control of the associated actuator (26) for a target movement contribution (16); and to determine an offset (54) between the target movement contribution and an actual movement contribution and to perform a correction on the basis of the offset.

2. The vehicle according to claim 1, wherein each of the multitude of omnidirectional drive means (12) provides a decentralized traction control for the drive system.

3. The vehicle according to claim 1 or 2, wherein the controlling means (18) is configured to provide, for a matching time interval, the same controlling command (22) to each of the multitude of omnidirectional drive means (12).

4. The vehicle according to any of the preceding claims, wherein each of the decentralized computing means (24) is configured to detect the offset (54) of the movement contribution (16_{f}) actually provided by the associated actuator (26) with respect to the target movement contribution (16ₛ), and to change the control of the associated actuator (26) on the basis of the offset (54) for a subsequent time interval so as to reduce the offset (54).

5. The vehicle according to claim 4, wherein the decentralized computing means (24) is configured to determine a correction vector for a travel vector representing the target movement, and to perform the control on the basis of a combination of the travel vector and the correction vector so as to reduce the offset (54).

6. The vehicle according to any of the preceding claims, wherein the omnidirectional drive means (12) is configured to correct the offset (54) between two closed-loop control steps of the controlling means.

7. The vehicle according to any of the preceding claims, wherein each of the decentralized computing means (24) is configured to detect an offset (54) of the movement contribution (16_{f}) provided by the associated actuator (26) with respect to the target movement contribution (16ₛ), and to transmit the offset (54) to other drive means (12) of the multitude of omnidirectional drive means (12).

8. The vehicle according to any of the preceding claims, wherein one of the drive means (12) is configured to receive information indicating an offset (54) between the target movement contribution (16ₛ) and an actual movement contribution (16_{f}) generated by another drive means (12), wherein the decentralized computing means (24) is configured to adapt the control of the associated actuator (26) on the basis of the offset (54) of the other drive means (12).

9. The vehicle according to claim 8, wherein the decentralized computing means (24) is configured to obtain, from the information, a correction vector for a travel vector representing the target movement or the target movement contribution (16ₛ), and to perform the control on the basis of a combination of the travel vector and the correction vector so as to adapt the control.

10. The vehicle according to any of the preceding claims, wherein the controlling means (18) is connected to the decentralized computing means (24) via a bus system (46).

11. The vehicle according to any of the preceding claims, wherein the omnidirectional drive means (12) includes omni wheels.

12. The vehicle according to any of the preceding claims, wherein the omnidirectional drive means (12) includes Mecanum wheels.

13. A sorting system with a multitude of vehicles according to any of the preceding claims.

14. A method for operating a vehicle with an omnidirectional drive system configured to provide a movement (14) of the vehicle; wherein the omnidirectional drive system comprises a multitude of omnidirectional drive means (12), wherein each of the multitude of omnidirectional drive means (12) comprises a decentralized computing means (24) and an associated actuator (26) set up for providing a movement contribution (16) for the movement (14), the method comprising:
providing to the omnidirectional drive system a controlling command (22) containing an instruction for performing the movement (14);
determining a target movement for the vehicle with each of the decentralized computing means (24);
determining, from the target movement, a control of the associated actuator (26) for a target movement contribution (16ₛ) with each of the decentralized computing means (24); and
determining an offset (54) between the target movement contribution and an actual movement contribution (16_{f}) with each of the decentralized computing means (24); and performing a correction on the basis of the offset.

15. A computer program having program code for performing the method according to claim 14 when the program runs on a computer.

## Revendications

1. Véhicule avec :
un système d'entraînement omnidirectionnel qui est conçu pour fournir un mouvement (14) du véhicule ; dans lequel le système d'entraînement omnidirectionnel présente une pluralité de moyens d'entraînement omnidirectionnel (12), dans lequel chaque moyen de la pluralité de moyens d'entraînement omnidirectionnel (12) présente un moyen de calcul décentralisé (24) et un actionneur associé (26) mis en place pour fournir une contribution de mouvement (16) pour le mouvement (14) ;
un moyen de commande (18) pour fournir un ordre de commande (22) au système d'entraînement omnidirectionnel qui contient une instruction pour réaliser le mouvement (14) ;
dans lequel chacun des moyens de calcul décentralisés (24) est conçu pour déterminer un mouvement de consigne pour le véhicule ; et, à partir du mouvement de consigne, pour déterminer pour une contribution de mouvement de consigne (16) une activation de l'actionneur associé (26) ; et pour déterminer un écart (54) entre la contribution de mouvement de consigne et une contribution de mouvement réelle et pour réaliser une correction sur base de l'écart.

2. Véhicule selon la revendication 1, dans lequel chaque moyen de la pluralité de moyens d'entraînement omnidirectionnel (12) fournit une régulation d'antipatinage décentralisée pour le système d'entraînement.

3. Véhicule selon la revendication 1 ou 2, dans lequel le moyen de commande (18) est conçu pour fournir le même ordre de commande (22) pendant un intervalle de temps correspondant de chacun des moyens de la pluralité de moyens d'entraînement omnidirectionnel (12).

4. Véhicule selon l'une des revendications précédentes, dans lequel chacun des moyens de calcul décentralisés (24) est conçu pour détecter l'écart (54) de la contribution de mouvement (16_{f}) fournie réellement par l'actionneur associé (26) par rapport à la contribution de mouvement de consigne (16ₛ) et pour modifier l'activation de l'actionneur associé (26) pendant un intervalle de temps suivant sur base de l'écart (54) afin de réduire l'écart (54).

5. Véhicule selon la revendication 4, dans lequel le moyen de calcul décentralisé (24) est conçu pour déterminer un vecteur de correction pour un vecteur de déplacement représentant le mouvement de consigne et pour réaliser l'activation sur base d'une combinaison du vecteur de déplacement avec le vecteur de correction, afin de réduire l'écart (54).

6. Véhicule selon l'une des revendications précédentes, dans lequel les moyens d'entraînement omnidirectionnel (12) sont conçus pour corriger l'écart (54) entre deux étapes de régulation des moyens de commande.

7. Véhicule selon l'une des revendications précédentes, dans lequel chacun des moyens de calcul décentralisés (24) est conçu pour détecter un écart (54) de la contribution de mouvement (16_{f}) fournie par l'actionneur associé (26) par rapport à la contribution de mouvement de consigne (16ₛ) et pour transmettre l'écart (54) à d'autres moyens d'entraînement (12) de la pluralité de moyens d'entraînement omnidirectionnel (12).

8. Véhicule selon l'une des revendications précédentes, dans lequel un des moyens d'entraînement (12) est conçu pour recevoir une information qui indique un écart (54) entre la contribution de mouvement de consigne (16ₛ) et une contribution de mouvement réelle (16_{f}) générée par un autre moyen d'entraînement (12), le moyen de calcul décentralisé (24) étant conçu pour adapter l'activation de l'actionneur associé (26) sur base de l'écart (54) de l'autre moyen d'entraînement (12).

9. Véhicule selon la revendication 8, dans lequel le moyen de calcul décentralisé (24) est conçu pour obtenir à partir de l'information un vecteur de correction pour un vecteur de déplacement représentant le mouvement de consigne ou la contribution de mouvement de consigne (16ₛ) et pour réaliser l'activation sur base d'une combinaison du vecteur de déplacement avec le vecteur de correction afin d'adapter l'activation.

10. Véhicule selon l'une des revendications précédentes, dans lequel le moyen de commande (18) est relié aux moyens de calcul décentralisés (24) par le biais d'un système de bus (46).

11. Véhicule selon l'une des revendications précédentes, dans lequel les moyens d'entraînement omnidirectionnel (12) comprennent des roues omnidirectionnelles.

12. Véhicule selon l'une des revendications précédentes, dans lequel les moyens d'entraînement omnidirectionnel (12) comprennent des roues mécanum.

13. Système de tri avec une pluralité de véhicules selon l'une des revendications précédentes.

14. Procédé destiné à faire fonctionner un véhicule avec un système d'entraînement omnidirectionnel, qui est conçu pour fournir un mouvement (14) du véhicule ; dans lequel le système d'entraînement omnidirectionnel présente une pluralité de moyens d'entraînement omnidirectionnel (12), dans lequel chaque moyen de la pluralité de moyens d'entraînement omnidirectionnel (12) présente un moyen de calcul décentralisé (24) et un actionneur associé (26) mis en place pour fournir une contribution de mouvement (16) pour le mouvement (14), avec les étapes suivantes :
fournir un ordre de commande (22) au système d'entraînement omnidirectionnel qui contient une instruction pour réaliser le mouvement (14) ;
déterminer un mouvement de consigne pour le véhicule avec chacun des moyens de calcul décentralisés (24) ;
déterminer une activation de l'actionneur associé (26) pour une contribution de mouvement de consigne (16ₛ) à partir du mouvement de consigne avec chacun des moyens de calcul décentralisés (24) ; et
déterminer un écart (54) entre la contribution de mouvement de consigne et une contribution de mouvement réelle (16_{f}) avec chacun des moyens de calcul décentralisés (24) ; et réaliser une correction sur base de l'écart.

15. Programme d'ordinateur avec un code de programme pour mettre en œuvre le procédé selon la revendication 14, lorsque le programme est exécuté sur un ordinateur.
